# EUROPÄISCHE PATENTSCHRIFT

(11) **EP 0 618 094 B1**
(45) Veröffentlichungstag und Bekanntmachung des Hinweises auf die Patenterteilung: **03.12.1997**
(21) Anmeldenummer: 94102514.0
(22) Anmeldetag: 19.02.1994
(51) Int. Cl.: B60D 1/02, F16F 9/16

(54) **Anhängerkupplung**
Trailer coupling
Attelage de remorque

(30) Priorität: 27.03.1993 DE 4310055
(43) Veröffentlichungstag der Anmeldung: 05.10.1994
(73) Patentinhaber: Hunger, Walter, Dr.-Ing. E.h., D-97074 Würzburg (DE)
(72) Erfinder: Hunger, Walter, Dr.-Ing. E.h., D-97074 Würzburg (DE)
(74) Vertreter: Nix, Frank Arnold, Dr.

(56) Entgegenhaltungen:
- EP-A- 0 327 863
- EP-A- 0 334 021
- DE-A- 3 804 455
- GB-A- 2 146 601
- US-A- 2 029 829

## Beschreibung

Die vorliegende Erfindung bezieht sich auf eine Anhängerkupplung gemäß dem Oberbegriff des Anspruchs 1.

Im Betrieb eines solchen aus Zugmaschine und Anhänger bestehenden Lastzugs treten Fahrstöße dadurch auf, daß die zwischen Anhänger und Zugfahrzeug wirkenden Kräfte schroffen Schwankungen unterworfen sind, insbesondere bei unebenen Fahrbahnen. Auf Gefällestrecken aber auch auf ebenen Fahrbahnen kann der Anhänger auch Schiebekräfte auf das Zugfahrzeug übertragen, so daß ein Vorzeichenwechsel der wirkenden Kräfte stattfindet, was zu einem Rattern und Schlagen in der Kupplung führt. Das gleiche tritt auf beim Anfahren, wenn beim Schalten der Gänge das Zugfahrzeug abwechselnd beschleunigt und verzögert. Somit ist besonders beim Anfahren des Lastzugs und beim Auflaufen des Anhängers das Problem von Fahrstößen besonders merklich.

Eine gewisse Abhilfe bieten hier die bekannten Spielbeseitigungsvorrichtungen, die mit einer Andrückklaue die Zugstangenöse beaufschlagen und diese gegen den Kupplungsbolzen drücken, so daß das Spiel zwischen diesem und der Öse beseitigt ist. Es bleiben aber die schroffen Kräfteschwankungen, die sich ungünstig auf das Fahrverhalten des Lastzugs auswirken.

Die vorliegende Erfindung bezweckt eine Beseitigung der beschriebenen nachteiligen Umstände und zielt auf eine hydraulische Dämpfung der auftretenden Fahrstöße.

An sich ist eine hydraulische Fahrstoßdämpfung bei Schienenfahrzeugen bekannt, und zwar aus der DE-OS 33 33 440. Hier geht es jedoch nicht um eine die Fahrstöße hydraulisch dämpfende Anhängerkupplung; vielmehr ist die Kupplung starr am Zugfahrzeug befestigt und die hydraulische Dämpfung von Fahrstößen ist in die Zugstange des angehängten Fahrzeugs verlegt, wozu diese Zugstange teleskopisch ausgebildet ist, wobei die innere Stange einen als Kolben wirkenden Ringbund aufweist, zu dessen beiden Seiten Dämpfungsflüssigkeitsräume gebildet sind, die über eine außerhalb verlegte Leitung mit einer in dieser eingebauten Dämpfungsdüse miteinander verbunden sind. Eine in Axialrichtung hinter den Dämpfungsflüssigkeitsräumen liegende Rückstellfeder wirkt im Sinne der Aufrechterhaltung einer mittleren Stellung der inneren Stange. Zwischen zwei aufeinanderfolgenden Wagen sind je zwei solcher Zugstangen mit Dämpfer beidseits der Fahrzeuglängsachse vorgesehen.

Die bekannte Ausbildung von dämpfenden Zugstangen zwischen zu kuppelnden Schienenfahrzeugen wäre für Straßenfahrzeuge nicht geeignet. Die Zugstangen von Lastzuganhängern eignen sich nicht zur teleskopischen Ausbildung; die erhebliche Baulänge der bekannten Ausbildung würde den Einbau schwierig machen und die außen verlegten Dämpfungsflüssigkeitsleitungen würden der Gefahr der Beschädigung bei rauhem Umgang mit dem Material ausgesetzt sein.

Aufgabe der vorliegenden Erfindung ist somit die Schaffung einer Anhängerkupplung für Straßen-Zugfahrzeuge, die die im Fahrbetrieb auftretenden Stöße dämpft und dabei von kompakter und robuster Bauweise ist.

Dabei wird ausgegangen von einer aus EP-A-0 327 863 bekannten Anhängerkupplung zur Verbindung von Zugfahrzeugen mit Anhängern, die eine Spielbeseitigungsvorrichtung aufweist und bei der der Kupplungskörper mit dem Fangmaul und der Kupplungsbolzenbaugruppe ein in ein zugfahrzeugfestes Lagergehäuse ragendes und in diesem drehbares Halterohr aufweist. Dieses Halterohr ist jedoch praktisch nicht längsverschieblich, sodaß schon deswegen hier keine Fahrstoßdämpfung stattfindet.

Die Lösung der gestellten Aufgabe ergibt sich aus den Patentansprüchen.

Durch die erfindungsgemäße Ausbildung der Anhängerkupplung wird der Charakter des Fahrbetriebs von Lastzügen erheblich weicher. Die den Endanschlag dämpfenden gummielastischen Anschlagdämpfer genügen, die Kolbenstufe des Kolbenrohrs praktisch ständig in einer Zwischenposition zwischen den Anschlägen, die nicht die mittlere Position sein muß, zu halten, so daß auftretende Stöße beiden Vorzeichens gedämpft werden. Der Arbeitshub braucht dabei nicht sehr groß zu sein; es genügen schon 10 mm zur entscheidenden Verbesserung der Fahrbetriebscharakteristik. Zusätzlich können jedoch auch noch Rückstellfedern vorgesehen werden, die die Kolbenstufe in der mittleren Stellung zu halten suchen, so daß im Mittel der zur Verfügung stehende Arbeitshub in beiden Richtungen gleich groß ist. Diese Rückstellfedern sind dann zweckmäßigerweise in den Dämpfungsflüssigkeitsräumen angeordnet oder umgeben diese, so daß sie nicht zu einer Vergrößerung der Baulänge führen.

Die Erfindung wird nachfolgend durch die Beschreibung von Ausführungsbeispielen an Hand der beigegebenen Zeichnungen weiter erläutert. Es zeigt:
- Fig. 1: einen Längsschnitt durch eine Anhängerkupplung mit Fahrstoßdämpfung;
- Fig. 2: die Ausbildung gemäß Fig. 1 mit Rückstellfedern.

Die am Fahrzeugrahmen 1 befestigte Anhängerkupplung besitzt einen Kupplungskörper 3, in dem ein Kupplungsbolzen 5 zum Erfassen der Zugstangenöse 9 der Zugstange 7 zwischen einer unteren Kuppelstellung und einer oberen Freigabestellung verschieblich ist. Am Kupplungskörper 3 ist ein Fangmaul 11 befestigt.

Auf dem Körper 3 sitzt die Kupplungsbolzenbaugruppe 13 mit einem Antrieb zur Verschiebung und Verriegelung des Kupplungsbolzens.

Das vordere Ende des Kupplungskörpers 3 ist von einem Halterohr 15 gebildet, welches in einem Lagergehäuse 17 gehalten ist, das seinerseits starr am Fahrzeugrahmen 1 befestigt ist. Im Halterohr ist eine Spielbeseitigungsvorrichtung eingebaut, deren auf die Zugstangenöse 9 wirkende Andrückklaue 19 im Fahrbetrieb wirksam wird.

Das Lagergehäuse besteht aus einer starr am Fahrzeugrahmen 1 befestigten hinteren Lagergehäusehälfte 17' und einer vorderen Lagergehäusehälfte 17'' sowie einem diese in einem Abstand haltenden Mantelrohr 21, wobei die genannten Teile zu einer starren Einheit miteinander verspannt sind.

Das Halterohr 15 ist gestuft ausgeführt und auf einen vorderen Abschnitt kleineren Durchmessers ist ein Kolbenrohr 23 mittels einer gesicherten Gewindeverbindung 25 aufgesetzt. Das Kolbenrohr 23 ist seinerseits gestuft ausgeführt und weist eine Anschlagstufe 27 größeren Durchmessers auf, aus deren Mitte eine Kolbenstufe 29 nochmals größeren Durchmessers absteht. Die Kolbenstufe 29 gleitet längs der Innenfläche des Mantelrohrs 21 und die beiden Absätze der Anschlagstufe 27 gleiten abgedichtet längs Innenflächen der Lagergehäusehälften 17', 17''.

Auf diese Weise ist beidseits der Kolbenstufe 29 je ein dicht abgeschlossener Dämpfungsflüssigkeitsraum 31 ausgebildet. Diese Räume haben Verbindung miteinander über einen oder mehrere Dämpfungskanäle 33, die durch die Kolbenstufe 29 verlaufen und in deren jeden eine Drossel 35 eingebaut ist. Wenn der Dämpfungskanal 33 zur Erzielung der gewünschten Drosselwirkung kalibriert ist, ist eine besondere Drossel entbehrlich. Ebenso ist es möglich, einen Drosselspalt zwischen Außenumfang der Kolbenstufe 29 und dem Mantelrohr 21 zu belassen.

Beidseits der Anschlagstufe 27 ist in den Lagergehäusehälften je ein ringförmiger Anschlagdämpfer 27 aus gummielastischem Material eingelegt. Diese wirken mit den Stirnflächen der Anschlagstufe 27 zusammen und bewirken bei einem Anschlagen ein Zurückfedern der Anschlagstufe auf einen gewissen Abstand, so daß das Kolbenrohr 23 sich praktisch während des gesamten Betriebs in einer von den Endanschlägen abgehobenen Zwischenstellung befinden wird.

Am vordersten Ende der Anhängerkupplung ist eine Drehbremse 40 in einem zweiteiligen Drehbremsengehäuse 46 vorgesehen. Diese besteht aus einer drehfest aber axialverschieblich auf dem Vorderende des Kolbenrohrs 23 sitzenden Bremsscheibe 42 und zwei beidseits von dieser befindlichen Bremsbacken 44, wobei die hintere Bremsbacke in der hinteren Drehbremsengehäusehälfte 46' drehfest sitzt und die vordere Bremsbacke in der vorderen Drehbremsengehäusehälfte 46'' drehfest gehalten ist, jedoch durch auf dem Umfang gleichmäßig verteilte Druckfedern 48 gegen die Bremsscheibe 42 gedrückt ist, so daß diese ihrerseits entsprechend gegen die hintere Bremsbacke 44 gedrückt ist.

Die Drehbremsengehäusehälften 46', 46'' haben die Gestalt von quadratischen Schilden und durch Bohrungen in ihren Ecken verlaufen Zuganker 50, mittels welcher sie zusammen mit den Lagergehäusehälften 17', 17'' samt zwischenliegendem Mantelrohr 21 starr verspannt sind.

Durch die Ausbildung des Kolbenrohrs 23 als besonderes, vom Kupplungskörper 3 mit seinem Halterohr 15 abtrennbares Bauelement ist ein Ausbau des Kupplungskörpers 3 möglich, ohne daß die Fahrstoßdämpfungsvorrichtung auseinandergenommen oder die Dämpfungsflüssigkeit aus den Dämpfungsflüssigkeitsräumen 31 abgelassen werden müßte. Es muß nur die Sicherung der Gewindeverbindung 25 aufgehoben werden, wonach das Halterohr 15 aus dem Kolbenrohr 23 herausgeschraubt werden kann.

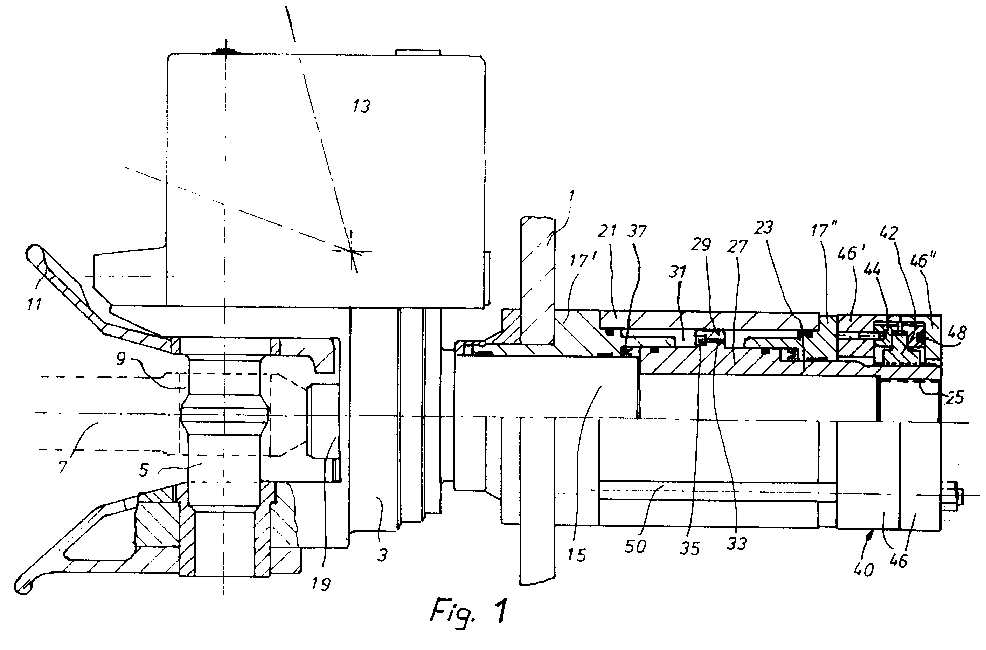

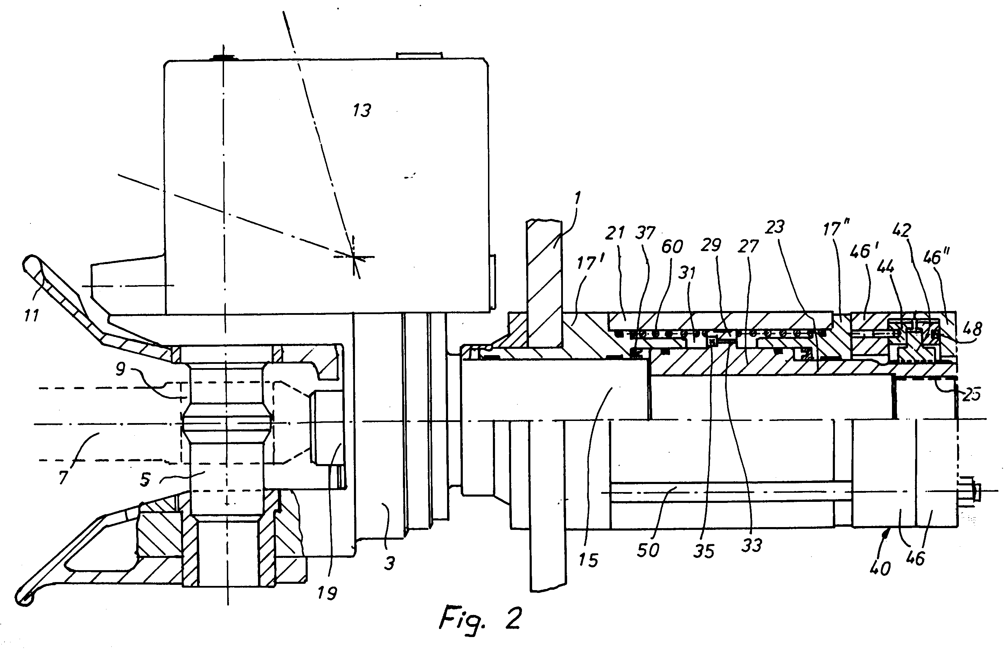

Die Ausbildung gemäß Fig. 2 unterscheidet sich von der gemäß Fig. 1 durch zwei Rückstellfedern 60, die in die Dämpfungsflüssigkeitsräume 31 eingesetzt sind und die Kolbenstufe 29 beidseits beaufschlagen. Diese Rückstellfedern wollen das Kolbenrohr 23 in einer mittleren Position seines Arbeitshubs halten. Wenn diese Rückstellfedern ausreichend stark bemessen sind, werden die Anschlagdämpfer 37 weniger beansprucht.

Die beschriebene Anhänger-Bolzenkupplung funktioniert wie folgt:

Im Fahrbetrieb ist die Zugstange 7 eines Anhängers von der Anhängerkupplung des Zugfahrzeugs durch den durch ihre Öse 9 greifenden Kupplungsbolzen 5 erfaßt. Die Andrückklaue 19 der Spielbeseitigungsvorrichtung ist an die Zugstange 7 angedrückt oder wird durch einen sich bei Beginn des Betriebs in der Spielbeseitigungsvorrichtung aufbauenden Druck angedrückt.

Die während des Fahrbetriebs und insbesondere beim Anfahren sowie beim Fahren auf schlechten Wegstrecken auftretenden und zwischen Zugfahrzeug und Anhänger wirkenden Stöße und schroffen Zugkraftänderungen werden durch die Fahrstoßdämpfungsvorrichtung ausgeglichen und vergleichmäßigt, indem die Dämpfungsflüssigkeit zwischen den beiden Dämpfungsflüssigkeitsräumen 31 gedrosselt hin und her überströmt.

### Bezugszeichenliste

- 1: Fahrzeugrahmen
- 3: Kupplungskörper
- 5: Kupplungsbolzen
- 7: Zugstange
- 9: Zugstangenöse
- 11: Fangmaul
- 13: Kupplungsbolzenbaugruppe
- 15: Halterohr
- 17: Lagergehäuse
- 17': hintere Lagergehäusehälfte
- 17'': vordere Lagergehäusehälfte
- 19: Andrückklaue
- 21: Mantelrohr
- 23: Kolbenrohr
- 25: Gewindeverbindung
- 27: Anschlagstufe
- 29: Kolbenstufe
- 31: Dämpfungsflüssigkeitsraum
- 33: Dämpfungskanal
- 35: Drossel
- 37: Anschlagdämpfer
- 40: Drehbremse
- 42: Bremsscheibe
- 44: Bremsbacke
- 46: Drehbremsengehäuse
- 46': hintere Drehbremsengehäusehälfte
- 46'': vordere Drehbremsengehäusehälfte
- 48: Druckfeder
- 50: Zuganker
- 60: Rückstellfeder

## Patentansprüche

1. Anhängerkupplung zur Verbindung von Zugfahrzeugen mit Anhängern, deren Kupplungskörper (3) mit dem Fangmaul (11) und der Kupplungsbolzenbaugruppe (13) ein in ein zugfahrzeugfestes Lagergehäuse (17) ragendes und in diesem drehbares Halterohr (15) aufweist,
dadurch gekennzeichnet, daß das Halterohr (15) im Lagergehäuse (17) auch längsverschieblich ist und mit einem Kolbenrohr (23) mit einer Kolbenstufe (29) verbunden ist,
wobei im Lagergehäuse (17) zu beiden Seiten der Kolbenstufe (29) Dämpfungsflüssigkeitsräume (31) gebildet sind, die durch wenigstens einen in der Kolbenstufe (29) verlaufenden Dämpfungskanal (33) miteinander verbunden sind.

2. Anhängerkupplung nach Anspruch 1, gekennzeichnet durch zwei den Arbeitshub des Kolbenrohrs (23) beidseits begrenzende Anschlagdämpfer (37).

3. Anhängerkupplung nach Anspruch 2, dadurch gekennzeichnet, daß die Anschlagdämpfer (37) gummielastische Einlagen sind.

4. Anhängerkupplung nach Anspruch 2 oder 3, dadurch gekennzeichnet, daß das Kolbenrohr (23) eine Anschlagstufe (27) größeren Durchmessers aufweist, deren Stirnflächen mit den ringförmig ausgebildeten Anschlagdämpfern (37) zusammenwirken, und die Kolbenstufe (29) nochmals größeren Durchmessers auf der Anschlagstufe (27) ausgebildet ist.

5. Anhängerkupplung nach einem oder mehreren der vorhergehenden Ansprüche, dadurch gekennzeichnet, daß das Kolbenrohr (23) ein mit dem Kupplungskörper (3) einstückig ausgebildetes oder fest verbundenes Halterohr (15) umgibt und mit diesen fest verschraubt ist.

6. Anhängerkupplung nach einem oder mehreren der vorhergehenden Ansprüche, dadurch gekennzeichnet, daß das Lagergehäuse aus zwei Hälften (17', 17'') besteht, die zusammen mit einem zwischen ihnen angeordneten Mantelrohr (21) zu einer starren Einheit verspannt sind.

7. Anhängerkupplung nach einem oder mehreren der vorhergehenden Ansprüche, gekennzeichnet durch zwei beidseits einer zum Kolbenrohr (23) gehörenden Stufe angeordnete Rückstellfedern (60), die sich mit ihren abgewandten Enden im Lagergehäuse (17) abstützen und das Kolbenrohr (23) in eine mittlere Stellung des Arbeitshubs rückstellend beaufschlagen.

8. Anhängerkupplung nach Anspruch 7, dadurch gekennzeichnet, daß die Rückstellfedern (60) in den Dämpfungsflüssigkeitsräumen (31) angeordnet sind und die Kolbenstufe (29) beidseits beaufschlagen.

9. Anhängerkupplung nach einem oder mehreren der vorhergehenden Ansprüche, gekennzeichnet durch eine Drehungen des Kupplungskörpers (3) entgegenwirkende Drehbremse (40) mit einer axialverschieblich und drehfest mit dem Kupplungskörper (3) verbundenen Bremsscheibe (42), die zwischen Bremsbacken (44) sitzt, von denen eine federbeaufschlagt ist.

10. Anhängerkupplung nach Anspruch 9, dadurch gekennzeichnet, daß die Drehbremse (40) vor dem Lagergehäuse (17) angeordnet ist und zwei Gehäusehälften (46', 46'') aufweist, in denen die Bremsbacken (44) angeordnet sind, und daß die Bremsscheibe (42) auf dem vorderen Ende des Kolbenrohrs (23) drehfest und axialverschieblich aufgesetzt ist.

11. Anhängerkupplung nach Anspruch 10, dadurch gekennzeichnet, daß die Lagergehäusehälften (17', 17'') mit dem zwischen ihnen eingespannten Mantelrohr (21) sowie die Drehbremsengehäusehälften (46', 46'') mittels gleichmäßig auf dem Umfang verteilten Zugankern (50) zu einer starren Baueinheit verspannt sind.

## Claims

1. Trailer coupling to connect towing vehicles to trailers, the coupling body (3) of which trailer coupling with the catch hole (11) and the coupling bolt unit (13) has a holding pipe (15) which projects into a bearing housing (17), secured to the towing vehicle, and which can be rotated in the bearing housing, characterized in that the holding pipe (15) can also be longitudinally displaced in the bearing housing (17); and is connected to a piston pipe (23) with a piston step (29), whereby in the bearing housing (17) on both sides of the piston step (29) damping-liquid chambers (31) are formed which are connected to each other by means of at least one damping channel (33) extending in the piston step (29).

2. Trailer coupling according to claim 1, characterized by two stop absorbers (37) which limit the working stroke of the piston pipe (23) on both sides.

3. Trailer coupling according to claim 2, characterized in that the stop absorbers (37) are rubber-elastic inlays.

4. Trailer coupling according to claim 2 or 3, characterized in that the piston pipe (23) has a stop step (27) of larger diameter, the front surfaces of which cooperate with the stop absorbers (37) which are constructed to be annular, and the piston step (29), again of larger diameter, is constructed on the stop step (27).

5. Trailer coupling according to one or more of the preceding claims, characterized in that the piston pipe (23) surrounds a holding pipe (15), which is constructed in one piece with the coupling body (3) or is firmly connected thereto, and is firmly screwed to the holding pipe.

6. Trailer coupling according to one or more of the preceding claims, characterized in that the bearing housing consists of two halves (17', 17'') which are braced together with an outer tubular jacket (21), which is arranged between them, in order to form a rigid unit.

7. Trailer coupling according to one or more of the preceding claims, characterized by two readjusting springs (60) arranged on both sides of a step of the piston pipe (23), the readjusting springs being supported in the bearing housing (17) with their ends which are directed away and loading the piston pipe (23) in a readjusting manner into a middle position of the working stroke.

8. Trailer coupling according to claim 7, characterized in that the readjusting springs (60) are arranged in the damping-liquid chambers (31) and load the piston step (29) on both sides.

9. Trailer coupling according to one or more of the preceding claims, characterized by a pivot brake (40) which counteracts rotations of the coupling body (3) and has a brake disc (42) which is connected to the coupling body (3) in an axially displaceable and rotationally secure manner, the brake disc being disposed between brake blocks (44), one of which is spring-loaded.

10. Trailer coupling according to claim 9, characterized in that the pivot brake (40) is arranged in front of the bearing housing (17) and has two housing halves (46', 46'') in which the brake blocks (44) are arranged, and in that the brake disc (42) is mounted on the front end of the piston pipe (23) in a rotationally secure and axially displaceable manner.

11. Trailer coupling according to claim 10, characterized in that the bearing-housing halves (17', 17''), with the outer tubular jacket (21) fixed between them, and the pivot-brake housing halves (46', 46'') are braced by means of tension rods (50), distributed evenly on the circumference, such that they form a rigid structural unit.

## Revendications

1. Attelage de remorque destiné à assurer la liaison entre des véhicules tracteurs et des remorques, dont le corps d'attelage (3) portant la tête d'attelage (11) et l'ensemble de broche d'attelage (13) comporte un tube de support (15) qui pénètre dans un boîtier de montage (17) lié fermement au véhicule tracteur et peut tourner dans ledit boîtier, caractérisé par le fait que le tube de support (15) peut également coulisser dans la direction longitudinale dans le boîtier de montage (17) et est lié à un tube-piston (23) pourvu d'un épaulement (29), des chambres (31) à liquide d'amortissement qui communiquent entre elles par au moins un canal d'amortissement ménagé dans l'épaulement (29) du piston étant formées dans le boîtier de montage (17) de part et d'autre de l'épaulement (29) du piston.

2. Attelage de remorque selon la revendication 1, caractérisé par deux butées formant amortisseurs (37) qui limitent la course de travail du tube-piston (23) des deux côtés.

3. Attelage de remorque selon la revendication 2, caractérisé par que les butées formant amortisseurs (37) sont des garnitures élastiques.

4. Attelage de remorque selon la revendication 2 ou 3, caractérisé par que le tube-piston (23) comporte un épaulement de butée(27) de diamètre plus important, dont les faces frontales coopèrent avec les butées formant amortisseurs (37) annulaires et que l'épaulement (29) du piston qui présente un diamètre encore plus important est aménagé sur l'épaulement de butée (27).

5. Attelage de remorque selon une ou plusieurs des revendications précédentes, caractérisé par le fait que le tube-piston (23) entoure un tube de support (15) qui forme un ensemble monobloc avec le corps d'attelage (3) ou est lié fermement à celui-ci et est vissé fermement audit tube de support.

6. Attelage de remorque selon une ou plusieurs des revendications précédentes, caractérisé par le fait que le boîtier de montage est formé de deux moitiés (17', 17'') qui, avec un tube-enveloppe (21) disposé entre deux, sont assemblées pour former une unité rigide.

7. Attelage de remorque selon une ou plusieurs des revendications précédentes, caractérisé par deux ressorts de rappel (60) qui sont disposés de part et d'autre d'un épaulement du tube-piston (23) et qui par leurs extrémités opposées prennent appui dans le boîtier de montage (17) et rappellent le tube-piston (23) dans une position médiane de la course de travail.

8. Attelage de remorque selon la revendication 7, caractérisé par le fait que les ressorts de rappel (60) sont disposés dans les chambres à liquide d'amortissement (31) et agissent de deux côtés sur l'épaulement (29) du piston.

9. Attelage de remorque selon une ou plusieurs des revendications précédentes, caractérisé par un frein (40) qui agit à l'encontre de la rotation du corps d'attelage (3) et comporte un disque (42) monté coulissant sur le corps d'attelage (3) mais solidaire de celui-ci en rotation, qui est disposé entre deux mâchoires de frein (44), parmi lesquelles l'une est soumise à l'action d'un ressort.

10. Attelage de remorque selon la revendication 9, caractérisé par le fait que le frein (40) est disposé à l'avant du boîtier de montage (17) et comporte deux moitiés de boîtier (46', 46'') dans lesquelles les mâchoires de frein (44) sont logées et par le fait que le disque de frein (42) est monté fixe en rotation et coulissant dans la direction axiale sur l'extrémité antérieure du tube-piston (23).

11. Attelage de remorque selon la revendication 10, caractérisé par le fait que les moitiés (17', 17'') de boîtier de montage avec le tube enveloppe (21) serré entre celles-ci et les moitiés (46', 46'') de boîtier de frein sont assemblées au moyen de tirants (50) uniformément répartis sur le pourtour pour former un ensemble de construction rigide.
